# EUROPÄISCHE PATENTANMELDUNG

(11) **EP 3 241 622 A1**
(43) Veröffentlichungstag der Anmeldung: **08.11.2017**
(21) Anmeldenummer: 17169636.2
(22) Anmeldetag: 05.05.2017
(51) Int. Cl.: B08B 3/02, B08B 3/04, B08B 5/02, B08B 13/00, B25J 11/00

(54) **ROBOTERZELLE ZUR KONTINUIERLICHEN WERKSTÜCKREINIGUNG UND VERFAHREN ZUR KONTINUIERLICHEN WERKSTÜCKREINIGUNG**

(30) Priorität: 06.05.2016 DE 102016005434; 10.02.2017 DE 102017001260
(71) Anmelder: SK-Technologies GmbH, 78733 Aichhalden-Rötenberg (DE)
(72) Erfinder: Kruck, Stefan, 78733 Aichhalden (DE)
(74) Vertreter: Westphal, Mussgnug & Partner Patentanwälte mbB

(57) **Zusammenfassung**

Roboterzelle (1) mit einem Roboterzellenraum (2) mit wenigstens einem Chargiergestell (8), wenigstens einem Roboter (3) an dem wenigstens ein Greifwerkzeug (4) angeordnet ist, wenigstens einer Reinigungsstation (5a, 5b, 5c) und wenigstens einem Reinigungsmedium (6), wobei der Roboter (3) im kontinuierlichen Prozess wenigstens ein zu reinigendes Werkstück (7) mit dem Greifwerkzeug (4) greift und auf direktem oder indirekten Weg in das Chargiergestell (8) einsetzt und gemäß dem FiFo-Prinzip wieder entnimmt.

## Beschreibung

Die Erfindung betrifft eine Roboterzelle zur kontinuierlichen Reinigung von Werkstücken in industrieller Anwendung gemäß dem Oberbegriff des Patentanspruchs 1 und ein Verfahren zur kontinuierlichen Werkstückreinigung gemäß dem Patentanspruch 20.

Werkstückreinigung ist eine Behandlung von Werkstücken nach erfolgter Vorbearbeitung. Diese Vorbearbeitung kann beispielsweise ein Zerspanungsprozess sein. Für solche Zerspanungsprozesse werden Zerspanungshilfsstoffe wie Öle oder Emulsionen verwendet. Diese Zerspanungshilfsstoffe dürfen im Ausliefer- oder Weiterbearbeitungszustand oftmals nicht an den Werkstücken verbleiben. Daher ist eine entsprechende Werkstückreinigung nötig.

Die Werkstückreinigung erfolgt zumeist in verschiedenen Schritten und mit verschiedenen Reinigungsmedien. Um diese Schritte einzuhalten sind Reinigungsanordnungen bzw. Reinigungsmaschinen nötig.

Derartige Anordnungen sind in vielfältiger Form prinzipiell bekannt und sind vor allem in zwei Kategorien einzuteilen. Dies sind erstens die Chargenanlagen (teilweise auch gemäß des Batchbetriebs benannt), sowie die Taktanlangen (teilweise auch gemäß des Inlinebetriebs benannt) genannt.

Hier und im Folgenden wird mit dem Begriff Roboterzelle die Verbindung von Roboter und Reinigungseinrichtung bezeichnet. Diese Roboterzelle kann sowohl als eigene Einheit, als auch in ein Gesamtmaschinenkonzept integriert gestaltet sein.

Chargenanlagen eignen sich sehr gut für eine Werkstückreinigung mit hervorragenden Waschergebnissen. Dies liegt daran, dass die Werkstücke in Behältnisse z.B. Waschkörbe eingesetzt werden und somit in gerichteter Lage in die Reinigungsmaschine eingesetzt werden. In der Reinigungsmaschine können dann bestimmte Reinigungsprogramme, beispielsweise abblasen, vorwaschen, spülen und abblasen abgerufen werden. Weiterer Vorteil solcher Anlagen ist, dass es wenig Verschleppung zwischen den Reinigungsmedien, beispielsweise zwischen Waschbad und Spülbad gibt, da die Reinigungskammer zwischen jedem Arbeitsgang abgepumpt wird. Großer Nachteil dieser Chargenanlagen ist, dass die Werkstücke aus dem eigentlichen Arbeitstakt z.B. Zerspanung mit nachfolgender Verpackung, entnommen werden müssen. Zudem ist ein Einsetzen in die Reinigungskörbe und die nachfolgende Entnahme nötig.

Chargenanlagen werden oftmals als Zentralanlagen verwendet, das heißt, mit einer Chargenanlage können Werkstücke mehrerer Zerspanungsmaschinen gereinigt werden.

Taktanlagen eignen sich sehr gut für schnelle Bearbeitungstakte. Wird die Zerspanung beispielsweise auf Rundtaktmaschine mit sehr kurzen Taktzeiten durchgeführt (Taktzeit z.B. 6 Sekunden) und es ist eine Reinigungszeit von mehreren Minuten nötig, so kann das Werkstück im Takt einfach in eine entsprechende Taktanlage eingesetzt werden. Diese kann im Durchlaufprinzip oder im Rundtaktprinzip aufgebaut werden. Die entsprechend lange Reinigungszeit wird durch eine entsprechend lange Durchlaufstrecke der Reinigungsanlage realisiert. Nachteil von Taktanlagen ist die Verschleppung von Reinigungsmedien. Ist beispielsweise ein Wascharbeitsgang mit anschließendem Spülarbeitsgang nötig, so kann durch fehlende Trennung entsprechender Abteile der Taktanlage die Verschleppung nicht verhindert werden.

Taktanlagen werden zumeist als dezentrale Anlagen verwendet, also direkt an der vorhergehenden Produktionsmaschine z.B. der Zerspanungsmaschine. Dies kann jedoch einen weiteren Nachteil bilden, nämlich entsprechende fehlende Flexibilität für den Einsatz für andere Produkte und/oder Produktionsmaschinen.

Nachteil bei beiden Anlagenkonzepten (Chargenanlagen und Taktanlagen) ist, ein fehlendes oder mangelndes Ausblasen von Zerspanungshilfsstoffen und sonstigen Verschmutzungen.

Der Erfindung liegt das Problem zugrunde, bekannte Nachteile von Chargenanlagen und Taktanlagen zu beseitigen.

Die Aufgabe der Erfindung besteht also in folgenden Vorgaben: Es soll keine Unterbrechung des eigentlichen Arbeitstaktes erfolgen, das heißt, es sollen Werkstücke in etwa der Zerspanungstaktzeit aus dem Reinigungsprozess kommen, womit ein kontinuierlicher Fertigungsfluss gewährleistet ist. Somit besteht die Forderung nach einem kontinuierlichen Verfahren. Es soll eine möglichst flexible Verwendungsmöglichkeit vorliegen. Es soll möglichst wenig Verschleppung zwischen den Reinigungstakten vorliegen. Es sollen Zerspanungshilfstoffe nur in geringem Umfang in den Reinigungsprozess eingebracht werden.

Die Aufgabe der Erfindung wird gelöst durch eine Roboterzelle zur Werkstückreinigung mit den Merkmalen des Patentanspruchs 1 sowie ein Verfahren zur Werkstückreinigung mit den Merkmalen des Patentanspruchs 20.

Vorteilhafte Ausgestaltungen und Weiterbildungen der Erfindung sind in den Unteransprüchen angegeben.

Die erfindungsgemäße Roboterzelle mit einem Roboterzellenraum mit wenigstens einem Chargiergestell, weist wenigstens einen Roboter auf. Der Roboter hat wenigstens ein Greifwerkzeug, mit dem er das zu reinigende Werkstück greifen kann. In der Roboterzelle ist wenigstens eine Reinigungsstation und wenigstens ein Reinigungsmedium angeordnet. Das Reinigungsmedium kann in einem Tank außerhalb der Roboterzelle gelagert sein, wobei es während des Reinigungsprozesses in die Roboterzelle gepumpt wird. Während des Reinigungsprozesses greift der Roboter wenigstens ein zu reinigendes Werkstück und führt dieses direkt oder indirekt zum Chargiergestell, in welches er das Werkstück einsetzt. Beim direkten Weg wird das Werkstück ohne Vorreinigung im Chargiergestell abgesetzt. Beim indirekten Weg erfolgt in einer ersten Reinigungsstation eine Vorreinigung und die Reinigung im Chargiergestell erfolgt als zweite bzw. nachfolgende Reinigungsstation. Während des Reinigungsprozesses im Chargiergestell müssen die Werkstücke eine gewisse Zeit der Reinigung unterzogen werden, um ein gewünschtes Reinigungsergebnis zu erhalten. Diese Reinigungszeit zu ermöglichen trotz einer eigentlich schnellen Taktzeit, stellt die Schwierigkeit dar. Mittels der Arbeit mit einem Roboter kann dies durch einen entsprechenden Programmablauf realisiert werden. So wird mit dem Roboterprogramm ein "First in - First out Prinzip" ermöglicht. Hier und im Folgenden wird dieses Prinzip als Fifo-Prinzip bezeichnet. Dies bedeutet, dass das Werkstück, welches zuerst (first) in den Prozess eingebracht wird, auch als erstes (first) wieder entnommen wird. Mittels einer entsprechenden Anzahl von Werkstücken innerhalb des Reinigungsprozesses bzw. innerhalb der Chargiergestelle kann somit gewünschte Reinigungszeit erreicht werden. Wenn beispielsweise die Taktzeit der Zerspanungsmaschine, aus der die zu reinigenden Werkstücke kommen, 6 Sekunden beträgt und eine Reinigungszeit von 60 Sekunden erforderlich ist, so müssen mindestens 10 Werkstücke im Chargiergestell anordnenbar sein. Am Ende des Reinigungsprozesses entnimmt der Roboter das Werkstück und gibt dies entweder außerhalb der Roboterzelle ab oder setzt es innerhalb der Roboterzelle auf einer Fertigteilablage ab. Auch die Fertigteilablage kann als Chargiergestell ausgebildet sein.

Ein solches FiFo-Prinzip wäre ohne einen automatisierten Roboterablauf nicht möglich, da beispielsweise ein menschlicher Eingriff in diesen Prozess bereits nach einigen Zyklen mit Fehlern im Ablauf behaftet wäre. Mit solchen Ablauffehlern würden dann Werkstücke zur kurz dem Reinigungsprozess unterzogen womit die Werkstücke unbrauchbar, also Ausschuß wären. Zudem würde dieser Ausschuß nicht erkannt, was den händischen Prozess ausschließt. Der erfindunggemäße Robotereinsatz mit einem Programmablauf gemäß dem FiFo-Prinzip macht sich den Vorteil zu Nutze, dass nicht nur ein Mensch durch einen Roboter ersetzt wird, sondern dass die Vorteile eines Roboters voll ausgeschöpft werden - hier die dauerhafte Einhaltung eines Programmablaufs. Mittels der Anwendung des FiFo-Prinzips ist ein kontinuierlicher Prozess gegeben.

Vorzugsweise ist das Chargiergestell beim Einsetzen des zu reinigenden Werkstücks bereits innerhalb des Reinigungsmediums befindlich. Dies hat den Vorteil, dass das Werkstück unmittelbar ins Reinigungsmedium eingebracht wird. Hiermit wird ein Antrocknen der Zerspanungshilfsstoffe verhindert.

Vorteilhafterweise wird das zu reinigende Werkstück vom Roboter zu einer ersten Reinigungsstation zum Abspülen des Werkstücks gebracht. Mittels vorprogrammierter Bewegung des Roboters bietet sich so der Vorteil, dass das Werkstück sehr gut von den Zerspanungshilfsstoffen befreit wird. Durch die Bewegung des Werkstücks umspült bzw. bläst ein Reinigungsmedium das Werkstück.

Gemäß einer bevorzugten Ausgestaltung der Erfindung ist das Reinigungsmedium in der ersten Abspülstation Luft. Insbesondere in der ersten Reinigungsstation, also vor dem Einsetzten in das Chargiergestell, bietet die Luft den Vorteil, dass das Werkstück von Spänen und Zerspanungshilffstoffen bereit wird.

In einer Weiterbildung der Erfindung sind die Chargiergestelle stapelbar und herausziehbar ausgeführt. Hierdurch können noch längere Reinigungszeiten erreicht werden, indem nämlich die Chargiergestelle übereinander gestapelt werden. Die Herausziehbarkeit der Chargiergestelle beschreibt die Möglichkeit, ein Gestell, vorzugsweise das unterste, unter den anderen Gestellen hervor zu ziehen.

In einer weiteren Ausgestaltung der Erfindung wird der Stapel- und Entstapelvorgang der Chargiergestelle vom Roboter übernommen. Hierdurch kann zusätzliche teure Mechanik und/oder Antriebstechnik für den Stapel- und Entstapelvorgang eingespart werden.

Vorzugsweise ist über dem wenigstens einen Chargiergestell ein Deckel angeordnet. Dieser Deckel soll verhindern, dass Reinigungsmedium nach außen dringt.

Vorteilhafterweise weist der Deckel an den Ablagepositionen der Werkstücke Ausnehmungen auf, womit die Werkstücke in die Chargiergestelle auch bei geschlossenem Deckel eingesetzt werden können.

In einer Weiterbildung der Erfindung ist der Deckel aus flexiblem Werkstoff gefertigt ist. Es eignet sich hierzu beispielsweise eine Gummischicht.

Eine Weiterbildung der Erfindung sieht vor, dass die Ausnehmungen am Gummideckel als Schnitte gestaltet sind. Somit kann der Roboter durch diese Schnitte hindurch die Werkstücke in die Chargiergestelle einsetzen, ohne dass Reinigungsmedium austreten kann.

Gemäß einer bevorzugten Ausgestaltung der Erfindung ist der Deckel öffenbar. Somit kann auch ein Deckel ohne Ausnehmungen verwendet werden. Dieser muss dann zum Einsetzen und Entnehmen von Werkstücken geöffnet werden.

Vorteilhafterweise wird wenigstens eine der Reinigungsstationen von einer Spülung durchströmt. Dies bietet den Vorteil, dass bessere Reinigungsergebnisse bewirkt werden.

In einer Weiterbildung der Erfindung ist wenigstens eine der Reinigungsstationen mit Ultraschall beaufschlagt. Dies bietet den Vorteil, dass bessere Reinigungsergebnisse bewirkt werden.

Gemäß einer vorteilhaften Ausgestaltung der Erfindung weist wenigstens eine Reinigungsstation Spritzdüsen auf. Mit diesen Spritzdüsen wird ein Reinigungsmedium auf die Werkstücke gespritzt.

In einer Weiterbildung der Erfindung wird das Werksück in einer Reinigungsstation derart vom Roboter mit vorprogrammierter Bewegung geführt, dass das Werkstück von einem Reinigungsmedium umspült und somit abgespült wird. Das Reinigungsmedium ist hierbei Luft. Das Werkstück wird somit von den vorigen Reinigungsmedien abgeblasen.

Vorzugsweise wird die Reinigungsstation "Abblasen nach Spülreinigungen" über der vorhergehenden Reinigungsstation angeordnet. Somit kann das abgeblasene Reinigungsmedium in die vorige Reinigungsstation zurücklaufen.

In einer Weiterbildung der Erfindung ist eine Reinigungsstation eine Trocknungsstation. Das Trocknen kann auch als Reinigungsprozess bezeichnet werden, da verbleibende Medientropfen auf den Werkstücken Flecken bilden könnten. Auch diese Trocknungsstation wird mit dem FiFo-Prinzip mit Werkstücken belegt.

Gemäß einer bevorzugten Ausgestaltung der Erfindung erfolgt die Trocknung mittels Wärmeleitung aus einer Heizplatte. Dies hat den Vorteil, dass ein effizienter Temperaturübergang erreicht werden kann. So kann die Wärme direkt in die Werkstücke übertragen werden, was erst durch das Setzten der Werkstücke möglich ist. In einer Durchlaufanlage wäre ein solcher Trockenvorgang nicht möglich. Hier wird oftmals ein ineffizienter Heißluftvorgang verwendet.

Vorzugsweise ist der Roboter wenigstens teilweise innerhalb einer der Reinigungsstationen angeordnet. Damit wird eine besonders platzsparende Anordnung der Roboterzelle erreicht.

Das erfindungsgemäße Verfahren zur kontinuierlichen Werkstückreinigung mit einer Roboterzelle umfassend einen Roboterzellenraum mit wenigstens einem Chargiergestell, in dem mindestens zwei zu reinigenden Werkstücke eingesetzt werden können, wenigstens einem Roboter, an dem wenigstens ein Greifwerkzeug zum Greifen mindestens eines zu reinigenden Werkstücks angeordnet ist, wenigstens einer Reinigungsstation, und wenigstens einem Reinigungsmedium, wobei eine der Reinigungsstationen eine Reinigungsstation zum gleichzeitigen Reinigen wenigstens zweier Werkstücke ist, in der das Chargiergestell angeordnet werden kann, zeichnet sich durch die folgenden nacheinander erfolgenden Schritte: Zunächst wird wenigstens ein zu reinigendes Werkstück, welches vorher durch einen Vorbearbeitungsprozess bearbeitet wurde, mit dem Greifwerkzeug durch den Roboter gegriffen. Dann wird das Werkstück entweder auf direktem oder indirektem Weg in das Chargiergestell, das in der Reinigungsstation zum gleichzeitigen Reinigen angeordnet ist, eingesetzt. In dem Chargiergestell ist schon eine Vielzahl von Werkstücken angeordnet, die dem gleichen Verfahren wie das zu reinigende Werkstück unterzogen sind und sich in unterschiedlichen Phasen des Reinigens in dem Chargiergestell befinden, abhängig davon, wann sie in das Chargiergestell eingesetzt wurden. Das neu eingesetzte Werkstück nimmt somit die Position eines vorherigen Werkstücks ein, das schon in der Reinigungsstation gereinigt und durch den Roboter aus dem Chargiergestell entnommen wurde. Die Anzahl der Werkstücke in dem Chargiergestell ergibt sich aus einer Reinigungszeit in der Reinigungsstation dividiert durch die Taktzeit des Vorbearbeitungsprozesses, zum Beispiel des Zerspanungsprozesses. Das Chargiergestell kann in einem ersten Reinigungsmedium angeordnet sein oder das erste Reinigungsmedium enthalten, so dass die Reinigung eines Werkstücks beginnt, sobald das Werkstück in das Chargiergestell eingesetzt wird. Die Reinigungszeit in dieser Reinigungsstation entspricht also der Zeit des Verbleibens in dem Chargiergestell. Das neu eingesetzte Werkstück wird in dem Chargiergestell mit dem ersten Reinigungsmedium während der vorbestimmten Reinigungszeit gereinigt. Während des Reinigens des neu eingesetzten Werkstücks werden die vor diesem Werkstück in das Chargiergestell eingesetzten Werkstücke in der gleichen Reihenfolge, in der sie eingesetzt wurden, nach der Reinigungszeit aus dem Chargiergestell entnommen. Gleichzeitig werden auch weitere Werkstücke durch den Roboter nacheinander in das Chargiergestell eingesetzt und darin gereinigt. Somit wird das Fifo-Prinzip eingehalten. Sobald das Reinigen des neu eingesetzten Werkstücks fertig ist, wird es aus dem Chargiergestell gemäß dem Fifo-Prinzip entnommen, das heißt, nachdem alle die vor ihm eingesetzten Werkstücke entnommen wurden. Dann kann ein weiteres, neu vorbearbeitetes Werkstück durch den Roboter an der Position des gereinigten Werkstücks eingesetzt werden. Das Reinigungsverfahren erfolgt somit kontinuierlich und ohne Wartezeit, was ein effektives und kostengünstiges Verfahren bietet.

Vorzugsweise kann das zu reinigende Werkstück vor dem Einsetzen in das Chargiergestell zunächst in eine Abspülstation mit vorprogrammierter Bewegung durch den Roboter geführt werden. In der Abspülstation wird das Werkstück mit einem zweiten Reinigungsmedium, das vorzugsweise Luft ist, umspült und/oder abgeblasen. Dies ermöglicht eine einfache Vorreinigung, mit der das Werkstück von einfach zu beseitigenden Stoffen befreit werden kann, so dass diese Stoffe nicht in das Chargiergestell eingebracht werden.

Um die gereinigten Werkstücke von dem ersten Reinigungsmedium des Chargiergestells zu befreien, kann das Werkstück nach dem Reinigen in dem Chargiergestell in eine Abblasstation mit vorprogrammierter Bewegung durch den Roboter geführt werden. Dort wird das Werkstück mit einem weiteren Reinigungsmedium, vorzugsweise Luft, abgespült.

Abschließend, das heißt nachdem das Werkstück in den verschiedenen Reinigungsstationen behandelt wurde, kann das Werkstück in eine Trocknungsstation eingesetzt werden. Dort wird das Werkstück mittels Wärmeleitung getrocknet. Nach der Trocknung wird das Werkstück aus der Trocknungsstation, vorzugsweise gemäß dem Fifo-Prinzip entnommen.

Ausschlaggebend für die vorliegende Erfindung ist damit, dass es sich bei dem zugrunde liegenden Reinigungsprozess um einen kontinuierlichen Prozess handelt, der ohne Unterbrechung zum Be- und Entladen durchgängig läuft.

Die Erfindung wird anhand der nachfolgenden Figuren ausführlich erläutet. Es zeigen:
- Fig. 1: eine Seitenansicht eines Ausführungsbeispiels einer Roboterzelle mit einer Abblasstation, einer nachfolgenden Reinigungsstation, einer nachfolgenden Abblasstation und einer letzten Trocknungsstation.
- Fig. 2: eine Draufsicht eines Chargiergestells mit Darstellung der Abarbeitungsreihenfolge

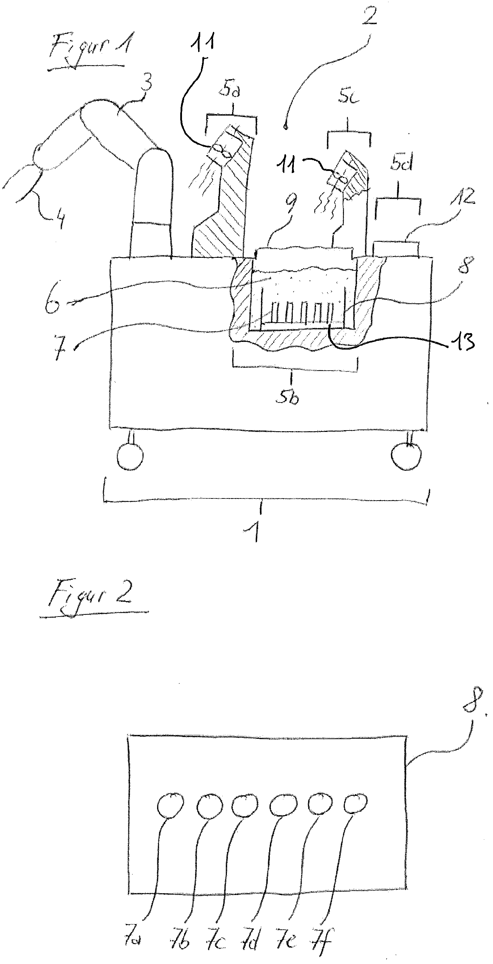

In der Seitenansicht der Figur 1 ist ein Ausführungsbeispiel einer Roboterzelle 1 mit vier Reinigungsstationen 5a, 5b, 5c, 5d inklusive einer Trocknungsstation 5d dargestellt.

Die Roboterzelle 1 weist in der ersten Reinigungsstation 5a eine Abspülstation mit Spritzdüsen 11 auf. In der zweiten Reinigungsstation 5b zum gleichzeitigen Reinigen wenigstens zweier Werkstücke 7 ist ein Chargiergestell 8 mit den entsprechenden Werkstücken 7 dargestellt. Die dritte Reinigungsstation 5c ist eine Abblasstation, die ebenfalls mit Spritzdüsen 11 versehen ist, und befindet sich räumlich über der zweiten Reinigungsstation 5b. In dieser dritten Reinigungsstation 5c werden die Werkstücke 7 abgeblasen, damit das verbleibende Reinigungsmedium 6 der zweiten Reinigungsstation in diese zweite Reinigungsstation zurücklaufen bzw. ablaufen kann. Ein komplettes Reinigungsverfahren erfolgt dadurch, dass die Werkstücke 7 durch die Reinigungsstationen 5a bis 5d in dieser Reihenfolge durchlaufen.

In der Draufsicht nach Figur 2 ist ein Ausführungsbeispiel eines Chargiergestells 8 mit sechs Werkstücken gezeigt. Die Abarbeitungsreihenfolge beschreibt die sechs Werkstücke 7 mit 7a,7b,7c,7d,7e und 7f. Hierbei wird das Werkstück 7a zuerst in das Chargiergestell 8 eingesetzt und der Reinigungszeit unterzogen. Das Werkstück 7b folgt als nächstes, wobei das Werkstück 7f zuletzt eingesetzt wird. Wenn Werkstück 7f eingesetzt ist, folgt die Entnahme des Werkstücks 7a. Danach beginnt die Belegung neu mit der Belegung eines neuen Werkstücks 7a. Es wird jeweils ein Werkstück 7 entnommen und an dieser Stelle ein neues eingesetzt. Die Anzahl der Werkstücke 7, die auf einem Chargiergestell 8 platziert sind, ergibt sich aus der Taktzeit des vorhergehenden Zerspanungsprozesses und der nötigen Reinigungszeit. Die Anzahl der Werkstücke 7 ergibt sich aus der Reinigungszeit dividiert durch die Taktzeit des Zerspanungsprozesses. Wenn die Reinigungszeit beispielsweise 60 Sekunden beträgt und die Taktzeit des Zerspanungsprozesses 10 Sekunden, so sind 6 Werkstücke 7 im Chargiergestell 8 anzuordnen. Damit ist ein kontinuierliches Reinigungsverfahren möglich.

### Bezugszeichenliste

- 1: Roboterzelle
- 2: Roboterzellenraum
- 3: Roboter
- 4: Greifwerkzeug
- 5: Reinigungsstation
- 5a: Abspülstation
- 5b: Reinigungsstation zum gleichzeitigen Reinigen
- 5c: Abblasstation
- 5d: Trocknungsstation
- 6: Reinigungsmedium
- 7, 7a-7f: Werkstück
- 8: Chargiergestell
- 9: Deckel

- 11: Spritzdüsen
- 12: Heizplatte
- 13: Ablageposition

## Patentansprüche

1. Roboterzelle (1) mit einem Roboterzellenraum (2) mit wenigstens einem Chargiergestell (8), in dem mindestens zwei zu reinigenden Werkstücke (7) eingesetzt werden können, wenigstens einem Roboter (3), an dem wenigstens ein Greifwerkzeug (4) zum Greifen mindestens eines zu reinigenden Werkstücks (7) angeordnet ist, wenigstens einer Reinigungsstation (5), und wenigstens einem Reinigungsmedium (6), wobei eine der Reinigungsstationen (5) eine Reinigungsstation (5b) zum gleichzeitigen Reinigen wenigstens zweier Werkstücke (7) ist, in der das Chargiergestell (8) angeordnet werden kann,
**dadurch gekennzeichnet, dass**
der Roboter (3) derart ausgebildet ist, dass er im kontinuierlichen Prozess die wenigstens zwei zu reinigende Werkstücke (7) mit dem Greifwerkzeug (4) greifen und auf direktem oder indirekten Weg in das Chargiergestell (8), das während eines Reinigungsprozesses in der Reinigungsstation (5b) zum gleichzeitigen Reinigen angeordnet ist, einsetzen und nach dem Reinigen der Werkstücke (7) in dem Chargiergestell (8) mit einem ersten Reinigungsmedium (6) gemäß dem FiFo-Prinzip wieder entnehmen kann.

2. Roboterzelle (1) nach Anspruch 1,
**dadurch gekennzeichnet, dass** das
Chargiergestell (8) beim Einsetzen der Werkstücke (7) innerhalb des Reinigungsmediums (6) befindlich ist.

3. Roboterzelle (1) nach einem der vorhergehenden Ansprüche,
**dadurch gekennzeichnet, dass** eine der
Reinigungsstationen (5) eine Abspülstation (5a) zum Abspülen der Werkzeuge (7) mit dem Reinigungsmedium (6) ist, wobei der Roboter (3) derart ausgebildet ist, dass er die zu reinigende Werkstücke (7) vor dem Einsetzen in dem Chargiergestell (8) zu der Abspülstation (5a) mit vorprogrammierter Bewegung führen kann, wobei die Werkstücke (7) in der Abspülstation (5a) mit einem zweiten Reinigungsmedium umspült und/oder abgeblasen werden.

4. Roboterzelle (1) nach Anspruch 3,
**dadurch gekennzeichnet, dass** das
zweite Reinigungsmedium Luft ist.

5. Roboterzelle (1) nach einem der vorhergehenden Ansprüche,
**dadurch gekennzeichnet, dass** das
Chargiergestell (8) stapelbar und herausziehbar ausgeführt ist.

6. Roboterzelle (1) nach Anspruch 5,
**dadurch gekennzeichnet, dass** der Roboter derart ausgebildet ist, dass er den Stapel- und Entstapelvorgang ausführen kann, wobei die Chargiergestelle (8) übereinander und/oder nebeneinander gestapelt und gezogen werden können.

7. Roboterzelle (1) nach einem der vorhergehenden Ansprüche,
**dadurch gekennzeichnet, dass** über dem wenigstens einen Chargiergestell (8) ein Deckel (9) angeordnet ist.

8. Roboterzelle (1) nach Anspruch 7,
**dadurch gekennzeichnet, dass** der Deckel (9) an Ablagepositionen (13) der Werkstücke (7) Ausnehmungen aufweist.

9. Roboterzelle (1) nach einem der Ansprüche 7 oder 8,
**dadurch gekennzeichnet, dass** der Deckel (9) aus einem flexiblem Werkstoff besteht.

10. Roboterzelle (1) nach Anspruch 8 oder 9,
**dadurch gekennzeichnet, dass** die Ausnehmungen als Schnitte gestaltet sind.

11. Roboterzelle (1) nach Anspruch 7,
**dadurch gekennzeichnet, dass** der Deckel (9) öffenbar ist.

12. Roboterzelle (1) nach einem der vorhergehenden Ansprüche, **dadurch gekennzeichnet, dass** wenigstens eine der Reinigungsstationen (5) von einer Spülung durchströmt ist.

13. Roboterzelle (1) nach einem der vorhergehenden Ansprüche, **dadurch gekennzeichnet, dass** wenigstens eine der Reinigungsstationen (5) mit Ultraschall beaufschlagbar ist.

14. Roboterzelle (1) nach einem der vorhergehenden Ansprüche, **dadurch gekennzeichnet, dass** wenigstens eine der Reinigungsstationen (5) Spritzdüsen (11) aufweist, mit denen eines der Reinigungsmedien auf die Werkstücke (7) spritzen kann.

15. Roboterzelle (1) nach einem der vorhergehenden Ansprüche, **dadurch gekennzeichnet, dass** wenigstens eine der Reinigungsstationen eine Abblasstation (5c) zum Abspülen der Werkstücke (7) mit einem weiteren Reinigungsmedium nach einem Reinigen in einer anderen Reinigungsstation (5b) ist.

16. Roboterzelle (1) nach einem der vorhergehenden Ansprüche, **dadurch gekennzeichnet, dass** wenigstens die Abblasstation (5c) räumlich über der Reinigungsstation (5b) zum gleichzeitigen Reinigen angeordnet ist.

17. Roboterzelle (1) nach einem der vorhergehenden Ansprüche, **dadurch gekennzeichnet, dass** eine Reinigungsstation eine Trocknungsstation (5d) ist und ebenfalls mit dem FiFo-Prinzip mit Werkstücken (7) belegt wird.

18. Roboterzelle (1) nach Anspruch 17,
**dadurch gekennzeichnet, dass** die Trocknungsstation (5d) eine Heizplatte (12) zur Trocknung der Werkstücke (7) mittels Wärmeleitung aufweist.

19. Roboterzelle (1) nach einem der vorhergehenden Ansprüche, **dadurch gekennzeichnet, dass** der Roboter (3) wenigstens teilweise innerhalb einer der Reinigungsstationen (5) angeordnet ist.

20. Verfahren zur kontinuierlichen Werkstückreinigung mit einer Roboterzelle (1) umfassend einen Roboterzellenraum (2) mit wenigstens einem Chargiergestell (8), in dem mindestens zwei zu reinigenden Werkstücke (7) eingesetzt werden können, wenigstens einem Roboter (3), an dem wenigstens ein Greifwerkzeug (4) zum Greifen mindestens eines zu reinigenden Werkstücks angeordnet ist, wenigstens einer Reinigungsstation (5), und wenigstens einem Reinigungsmedium (6), wobei eine der Reinigungsstationen (5) eine Reinigungsstation (5b) zum gleichzeitigen Reinigen wenigstens zweier Werkstücke (7) ist, in der das Chargiergestell (8) angeordnet werden kann,
**gekennzeichnet durch** die nacheinander erfolgenden Schritte:
- Greifen wenigstens eines zu reinigenden Werkstücks (7) mit dem Greifwerkzeug (4) durch den Roboter (3),
- Einsetzen auf direktem oder indirektem Weg des Werkstücks (7) in das Chargiergestell (8), das in der Reinigungsstation (5b) zum gleichzeitigen Reinigen angeordnet ist,
- Reinigen des Werkstücks (7) in dem Chargiergestell (8) mit einem ersten Reinigungsmedium (6),
- Entnehmen des Werkstücks (7) aus dem Chargiergestell (8) gemäß dem Fifo-Prinzip,
wobei das Verfahren kontinuierlich erfolgt.

21. Verfahren zur kontinuierlichen Werkstückreinigung nach Anspruch 20, **gekennzeichnet durch** den Schritt:
- Führen mit vorprogrammierter Bewegung durch den Roboter (3) des zu reinigenden Werkstücks (7) vor dem Einsetzen in das Chargiergestell (8) in eine Abspülstation (5a) und Umspülen und/oder Abblasen des Werkstückes (7) mit einem zweiten Reinigungsmedium.

22. Verfahren zur kontinuierlichen Werkstückreinigung nach einem der Ansprüche 20 oder 21, **gekennzeichnet durch** den Schritt:
- Führen mit vorprogrammierter Bewegung durch den Roboter (3) des Werkstücks (7) nach dem Reinigen in dem Chargiergestell (8) in eine Abblasstation (5c) und Abspülen des Werkstückes (7).

23. Verfahren zur kontinuierlichen Werkstückreinigung nach einem der Ansprüche 20 bis 22, **gekennzeichnet durch** den Schritt:
- Abschließendes Einsetzen des Werkstücks (7) in eine Trocknungsstation (5d), Trocknen des Werkstückes (7) mittels Wärmeleitung und Entnehmen des Werkstücks (7) aus der Trocknungsstation (5d) gemäß dem Fifo-Prinzip.
